Europäisches Patentamt

European Patent Office

Office européen des brevets

(19)

(11) Publication number: **0 101 438**
**B1**

(12) # EUROPEAN PATENT SPECIFICATION

(45) Date of publication of patent specification: **28.01.87**

(21) Application number: **82900904.2**

(22) Date of filing: **18.02.82**

(86) International application number:
**PCT/US82/00195**

(87) International publication number:
**WO 83/02923 01.09.83 Gazette 83/20**

(51) Int. Cl.⁴: **B 60 K 41/24, F 16 D 67/02,
A 01 D 34/63**

(54) CLUTCH AND BRAKE MECHANISM.

(43) Date of publication of application:
**29.02.84 Bulletin 84/09**

(45) Publication of the grant of the patent:
**28.01.87 Bulletin 87/05**

(84) Designated Contracting States:
**FR**

(56) References cited:
**US-A-3 352 176
US-A-3 420 343
US-A-3 507 374
US-A-3 593 505
US-A-4 213 521
US-A-4 333 303
US-A-4 362 004**

(73) Proprietor: **MTD PRODUCTS INC.
5965 Grafton Road P.O.Box 36900
Cleveland, OH 44136 (US)**

(72) Inventor: **PLAMPER, Gerhard R.
5620 Sleepy Hollow Road
Valley City, OH 44280 (US)**

(74) Representative: **Simonnot, Bernard et al
Cabinet Simonnot 49, Rue de Provence
F-75442 Paris Cédex 09 (FR)**

Courier Press, Leamington Spa, England.

## Description

### Field to Which Invention Relates

My invention relates to a clutch and brake mechanism particularly for the concurrent braking and declutching of a rotatable working element. It is especially suitable for a rotary-type lawn mower so that the working element, the rotating blade, is braked against rotation at substantially the same time that the blade is clutched to rotate with the shaft at substantially the same time that the blade is unbraked and permitted to rotate.

### Background Art of the Invention

The related background art known to the Applicant but which does not teach, disclose, or suggest the present invention, includes the following patents, presented under five groups.

I: US—A—4,035,994 and US—A—4,148,173.

These references have independently operated centrifugal clutch and band brake. The clutch and brake perform their functions by contacting the inner and outer surfaces, respectively, of a single drum.

II: US—A—4,213,521, US—A—4,286,701, and US—A—2,097,731.

These references operate by the selective upwards and downwards movement of a braking ring. In the upward position of the braking ring a spring forces a movable drive member upwards against a clutch disc. In the downward position of the braking ring only the braking ring contacts the movable drive member.

III: US—A—3,420,343 and US—A—4,226,313.

Like U.S. patents 4,213,521 and 4,286,701 these references also operate by the selective upwards and downwards movement of a braking ring. The difference is that whereas in 4,213,521 and 4,286,701 the braking ring moved downward to brake the device in 3,420,343 and 4,226,313 the breaking ring moved upward.

IV: US—A—3,871,159 and US—A—4,141,439.

In these references a central drive piece rotatably connected to the output is selectively moved upwards and downwards to clutch or brake the output. In 4,141,439 the drive piece is spring loaded in the braking position.

V: US—A—3,352,176 and US—A—4,205,509.

These references are similar to U.S. 3,871,159 and 4,141,439 in that a movable member is moved upwards to brake and downwards to clutch the device. The movable member is spring loaded in the clutched position.

None of these prior art references are sufficiently close to warrant much discussion. All of the references, with the exception of patents US—A—4,035,994 and US—A—4,148,173 utilize some sort of operative movement *co-axially* of their respective devices to clutch and brake, that is some sort of friction element moves generally longitudinally in line with the input/output shafts. There is normally a spring, again co-axially oriented, to bias the friction element in either clutch or braking position. Both the axial movement of the friction element and the axial orientation of the spring require an increase in longitudinal height of the clutch-brake mechanism. They in addition require a complex operative mechanism to overcome an otherwise less torque capability.

The references US—A—4,035,994 and US—A—4,148,173 utilize a separate centrifugal clutch and band brake. These mechanisms are mechanically independent of each other. This separation and independence produces a device that has the unusual operative characteristics of a centrifugal clutch combined with the problems produced by the relative mechanical independency of the brake and clutch.

### Statement of the Invention

It is the main object of the invention to overcome the drawbacks of the prior art by providing an improved clutch and brake mechanism of relatively simple and economic construction which provides for quick and efficient substantially concurrent braking and declutching of a rotatable working element, such as the blade of a rotating type lawn mower, and the substantially concurrent unbraking and clutching of the rotatable working element.

It is a further object to assure that the motor-driven rotatable working element, such as the blade of a rotating type lawn mower, does not continue to rotate for any appreciable length of time after the working element is de-clutched and no longer being motor-driven.

Another object is to improve safety in the use of machines having rotatable working elements such as rotating type lawn mowers having blades driven by the mower motor.

A further object is to facilitate the control of the rotation of a motor-driven rotatable working element, such as the blade of a rotary type lawn mower, by use of a "dead-man" control, by assuring that the rotation of the rotatable working element by the still operating motor stops very quickly after the "dead-man" control is released.

Another object is to provide more responsive control of the rotation of a rotatable working element, such as the blade of a rotary type lawn mower, to assure that upon de-clutching of the working element from a driving motor, the rotation of the working element is almost simultaneously braked to discontinue rotation, and also to assure that upon clutching of the working element to the driving motor, the working element is not braked but is free to rotate.

These objects are achieved, according to the invention, by providing a clutch and brake mechanism for an apparatus having a clutch plate non-rotatively connected to a rotary drive shaft, a non-rotating brake plate, a driven member rotatably connected to the drive shaft, and a selectively operable friction member movable so as to operate as a clutch between the driven member and the clutch plate or as a brake between the drive member and the brake plate, the mechanism being characterized in that the selectively operable friction member is movable radially inward and outward of the axis of rotation of the drive shaft.

A mechanism disclosing the precharacterizing part is known from e.g. US—A—4 213 521.

Figures of the Drawings

Figure 1 is a longitudinal sectional view taken through the improved clutch and brake mechanism and illustrating the parts in braked and de-clutched positions;

Figure 2 is a partial sectional view showing a portion of the view in Figure 1 but illustrating the parts in unbraked and clutched positions;

Figure 3 is a plan view, partially in section, of the annular rotatable member apart from the mechanism shown in the view of Figure 1 and which carries the friction elements of the clutch and brake mechanism;

Figure 4 is a longitudinal sectional view taken through the line 4—4 of Figure 3;

Figure 5 is a plan view of the fan apart from the mechanism shown in the view of Figure 1;

Figure 6 is a cross-sectional view through a blade of the fan and is taken through the line 6—6 of Figure 5;

Figure 7 is a longitudinal sectional view of the fan shown in Figure 5 taken in a plane passing through the axis of the fan;

Figure 8 is a plan view, partially in section, of the brake plate in the mechanism showing the rotative position of the brake plate in the cup member or housing extension when the parts are in the braked and de-clutched positions;

Figure 9 is a plan view somewhat similar to that of Figure 8 but showing the rotative position of the brake plate when the parts are in the unbraked and clutched positions; and

Figure 10 is a side view of the brake plate removed from the mechanism shown in Figure 1.

The present invention is here described in connection with its use in a rotary type lawn mower having a motor driven rotatable blade for which it is especially adapted, although it is also useful in connection with other machines having a motor driven rotatable working element. The best and preferred embodiment of the invention as presently known to the inventor is as herein disclosed.

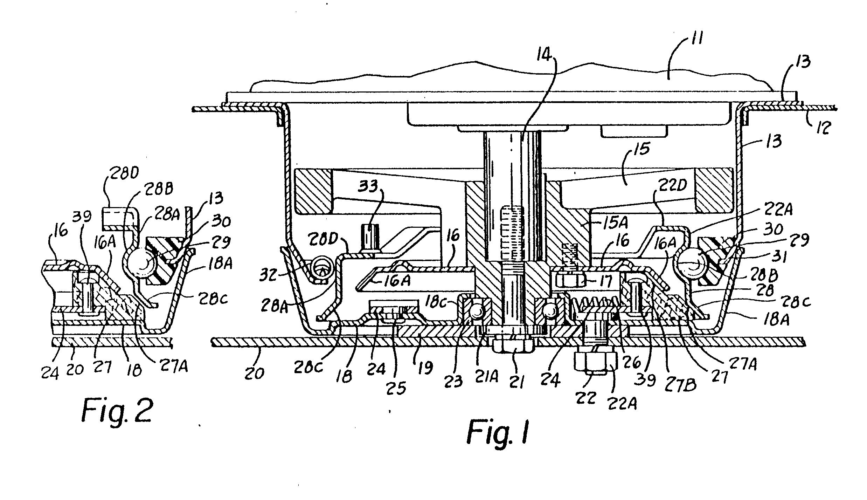

The lawn mower to which the invention is here applied has a motor or engine 11, which may be an internal combustion type motor or an electric motor, which is mounted on a mower housing 12. A fragmentary portion of the housing 12 and motor 11 is shown in Figure 1. The housing 12 has a downwardly extending cylindrical portion forming a cup member 13 onthe under portion of the housing 12 proper. The cup member 13 may be bolted, welded or otherwise secured to the housing 12 proper.

The motor 11 has a vertically extending shaft extending downwardly therefrom and in the usual manner the motor 11 drives the shaft 14 to rotate therewith.

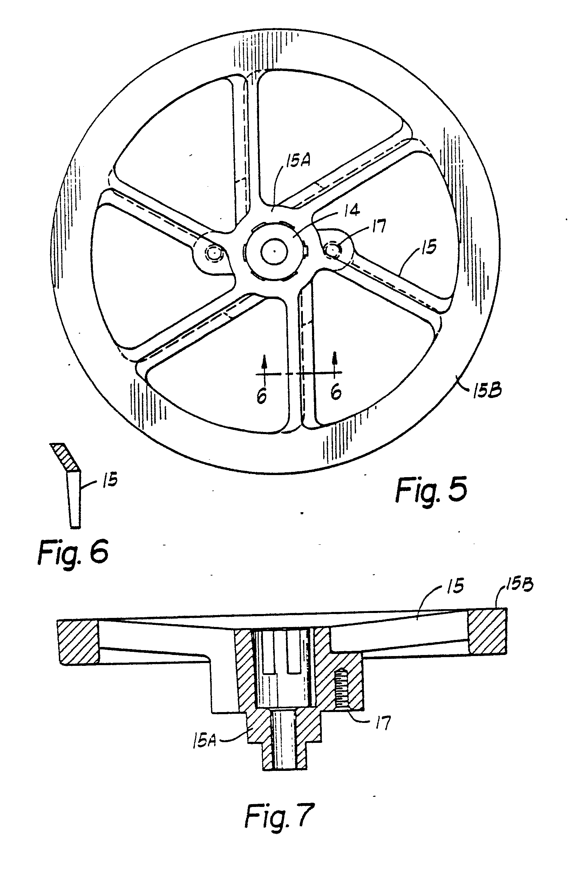

Secured to the shaft 14, and splined thereto so as to rotate with the shaft, is a fan 15. This fan 15 is best shown in Figures 5, 6 and 7 as removed from the mechanism to be shown alone. The fan 15 has a rim 15B joined by multiple spaced fan blades to a central hub 15A. The hub 15A is splined to the shaft 14 to cause rotation of the fan with the shaft. The different fan blades are oriented in respect to the direction of the rotation of the fan so as to blow or impel air downwardly about the mechanism within the cup member 13 for the purpose of blowing and expelling debris, such as particles of cut grass, oil and foreign material outwardly and away from the mechanism.

Mounted to the fan hub 15A concentrically of the shaft 14 is a steel clutch plate 16 by means of bolts 17. This clutch plate 16 as illustrated is in the form of an inverted saucer having its mouth directed downwardly. A central opening in the clutch plate 16 accommodates the hub 15A. The clutch plate rotates with the hub 15A and with the shaft 14 to which it is splined, and therefore the clutch plate 16 is rotatively driven by the motor 11.

The outer peripheral border of the clutch plate 16 is inclined downwardly at an approximate angle of 45° to the general plane of the clutch plate 16, which plane is normal to the axis of the shaft 14. This outer peripheral border provides on its under surface the inclined annular clutching surface 16A disposed as shown.

Rotatably mounted on the lower free end of shaft 14 is a rotatable plate member 18 having the configuration illustrated in Figures 1, 2, 3 and 4. This rotatable plate member 18 has an upturned outer flange portion 18A as illustrated and has the ribs and bosses pressed therein in the configuration shown. A central cylindrical portion 18C of the member 18 accommodates a bearing assembly 23 which is interposed between the lower end of hub 15A and the walls of cylindrical portion 18C. The rotatable plate member 18 is mounted on the hub 15A through the bearing assembly 23 in such manner that the shaft 14 may rotate free of the rotatable plate member 18 even when the plate member is braked and thus restrained against rotation.

A cutting blade 20 of usual form used in a rotary type lawn mower is bolted by bolts 22 and nuts 22A. This blade 20 is the rotatable working element on this machine known as a lawn mower. A spacer washer 19 is interposed between the blade 20 and the rotatable plate member 18. The arrangement is such that the rotatable plate member 18, washer 19, and blade 20 are joined as a unit and either rotate in unison with the shaft 14 or remain stationary or non-rotative together even while the shaft 14 and fan 15 may be rotating by the driving force of the motor 11.

A bolt 21 threadably secured to shaft 14 and fan hub 15A, together with a washer member 21A, extend through central openings in blade 20 and in spacer washer 19 to secure the inner race of bearing assembly 23 to the hub 15A.

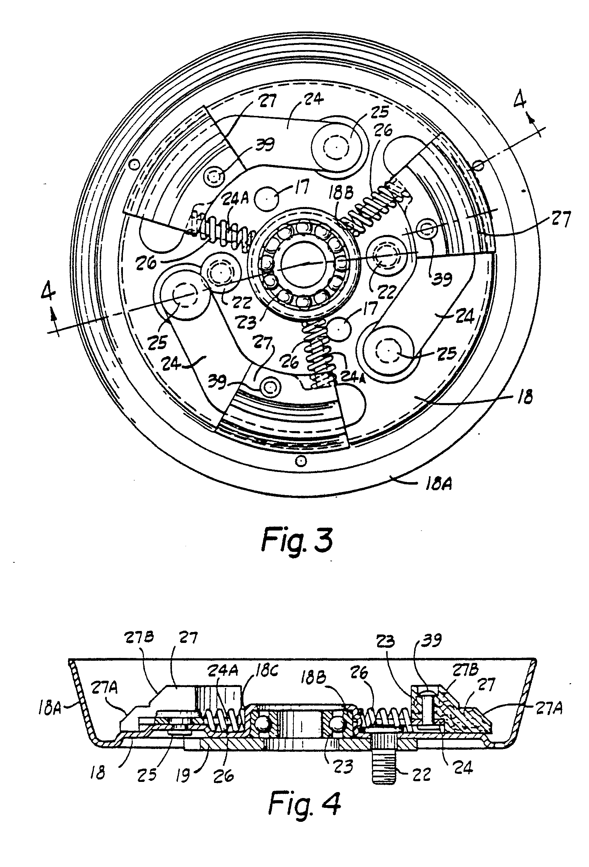

Pivotally mounted by means of three pivot pins 25, respectively, to the rotatable plate member 18 are three steel carrier members having the angular configuration, as seen in the plan view of Figure 3. Each of these three carrier members 24 has a finger portion 24A extending from the side of the outer free end of the respective carrier members 24 as better seen in the drawings.

Three compression springs 26 are mounted on the finger portions 24A, respectively, and extend radially inward to engage the central cylindrical portion 18C of the rotatable plate member 18. Small bosses 18B on the cylindrical portion 18C and equidistantly spaced around the cylindrical portion 18C accommodate the inward ends of springs 26 and thus maintain the springs in position. The bias of the springs 26 is such as to resiliently urge the carrier members 24 to swing on their respective pivot pins 25 radially outward.

Mounted on each of the carrier members 24 adjacent the outer free ends of each are friction elements 27. These friction elements are composed of molded plastic brake material variously composed of different compositions of resin, asbestos, lignin derivatives, powered metal and other known brake material having appropriate friction and wear characteristics.

Each of these three friction elements has at its outward peripheral portion an inclined braking surface 27A of arcuate form and disposed at substantially a 45° angle to the plane of rotatable plate 18 which is normal to the axis of shaft 14.

Also each of these friction elements 27 spaced radially inward and on a higher level, as seen in the drawings, has an inclined clutching surface 27B disposed at substantially a 45° angle to the plane of rotatable plate member 18 which is normal to the axis of shaft 14. The inclination of clutching surface 27B is such as to substantially complement the inclined surface 16A of clutch plate 16 so that they may closely engage along the length of clutching surface 27B.

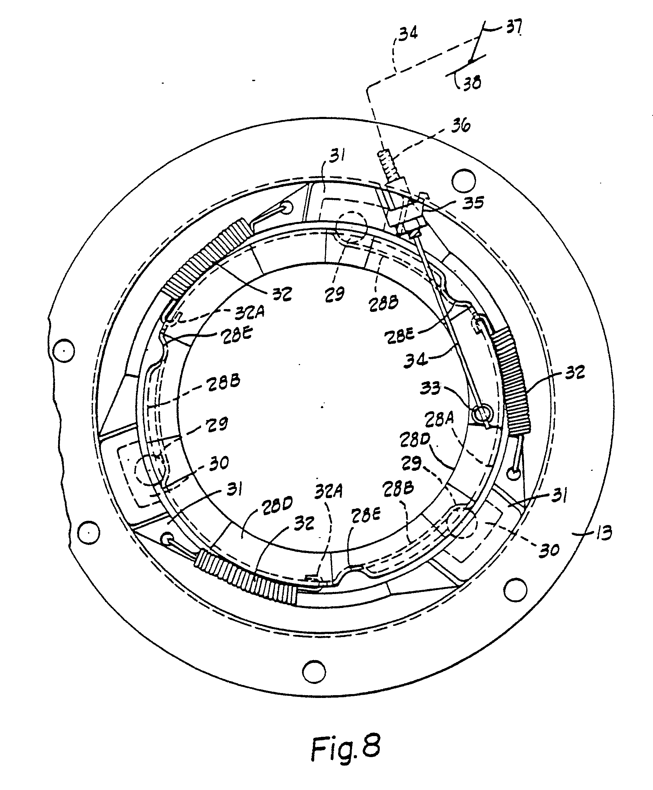

An annular brake plate 28 is disposed concentrically of the hub 15A and shaft 14. The brake plate 28 has a cylindrical portion 28A and an inturned flange portion 28D about its upper end. The cylindrical portion 28A has equidistantly spaced therearound three helically disposed grooves 28B. formed in the wall thereof in the manner illustrated in Figures 8, 9 and 10. Vertically directed ducts or openings 28A extend downwardly in the wall to provide ingress into the respective grooves 28B. At the bottom or lower free end of the brake plate the plate is flared outwardly to provide the inclined braking surface 28C on its underneath or interior surface. This braking surface 28C is inclined at approximately a 45° angle to the transverse plane of the mechanism, which plane is normal to the axis of shaft 14. The inclination of braking surface 28C complements the inclined braking surfaces 27A of the friction elements 27 so that they may closely engage along the length of braking surface 27A.

Carried by three nylon socket members 30 equidistantly spaced apart mounted on anchoring brackets 31 formed radially inward of cup member 13, are three steel balls 29 which protrude from nylon socket members 30 radially inward to the cylindrical portion 28A of the brake plate 28. The balls 29 interfit with the helical grooves 28B so as to ride along the incline of the helical grooves 28B. The balls 29 may be introduced into the grooves 28B through the ducts 28E upon longitudinal movement of brake plate 28 relative to the cup member 13 carrying the balls 29.

A screw reaction is provided by the balls 29 in the grooves 28B whereby a rotational movement of the brake plate 28 is translated into a longitudinal movement of the brake plate 28 relative to the cup member 13 and housing 12. Thus, rotation of brake plate 28 is translated into an up or down longitudinal movement of the brake plate parallel to the axis of shaft 14, the direction of the longitudinal movement up or down being dependent on the direction of rotational movement imparted to the brake plate.

Tending to impart a rotational movement to the brake plate 28 so as to be translated into a longitudinal movement which acts to lower the brake plate downwardly such as to the position shown in Figure 1, are three extension springs 32. Each of these equidistantly spaced springs 32 have one end anchored to anchoring brackets 31 on cup member 13 by hooked portions 32B secured to the respective brackets 31. Each of these springs 32 have their opposite end anchored by hooked portions 32A to the brake plate 28. The bias of these extension springs 32 is such as to impart a rotational movement to the brake plate 28 so as to move to the position shown in Figure 8, wherein the brake plate 28 is shown in braking position shown in Figure 1.

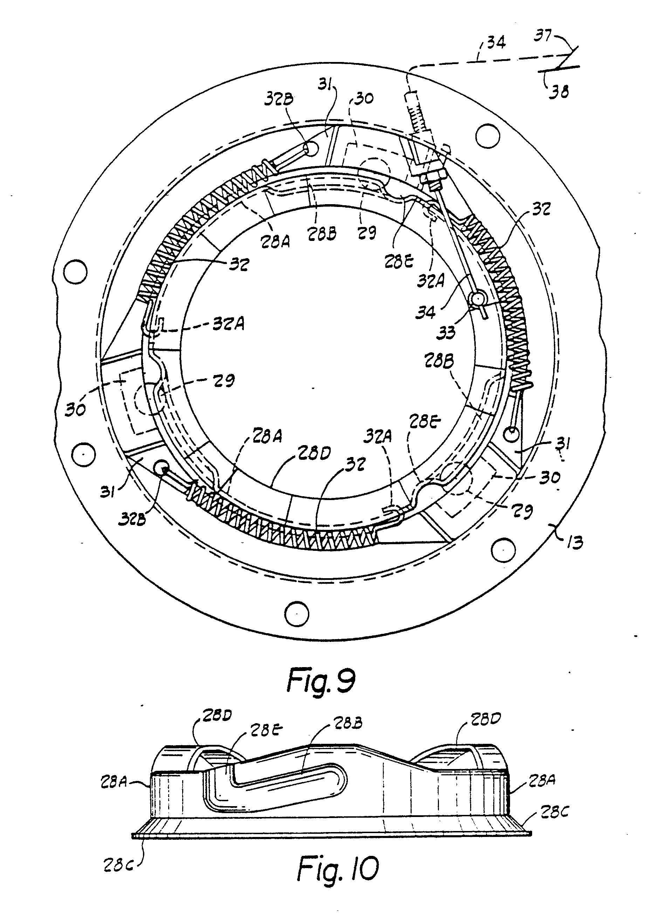

For overcoming or opposing the resilient bias of springs 32 and thus to permit the parts to be in the unbraked positions shown in Figures 2 and 9, a cable 34 is secured by an anchoring pin 33 to the inturned flange portion 28D of brake plate 28. This cable 34 extends through a fair lead 35 in one of the nylon blocks 30 from where it extends through a sheath or tubular casing 36 to a location externally of the housing 12 and cup member 13. A common use of the improved clutch and brake mechanism is its use in conjunction with a "dead-man" control. For diagrammatically illustrating this use, there is shown, in Figures 8 and 9, the cable externally of the housing in the form of a broken line which is connected to a "dead-man" control lever 37 swingably mounted on a supporting structure 38. Typically in a lawn moweruse of the invention, the supporting structure 38 is a handle of the mower held by the operator of the mower, and the lever 37 is pivotally mounted on the handle in position to be simultaneously held and pressed against the handle 38 by the operator. Upon release of the "dead-man" control lever 37 by the operator the force of springs 32 takes over as there is no longer tension on cable 34 and the brake plate moves rotationally from its non-braking position shown in Figure 9 to its braking position shown in Figure 8.

Thus, the movement of the brake plate 28 is between the braking position of Figure 1 to the non-braking position of Figure 2.

It is to be noted that the radial spacing between inclined braking surface 27A and the inclined clutching surface 27B is such that when the braking surface 27A is engaged by inclined surface 28C of the brake plate 28, the engaged friction element 27 is swung on its respective carrier member 24, in opposition to its respective spring 26, radially inward sufficiently that inclined clutching surface 27B is moved away from, and out of clutching engagement with inclined clutching surface 16A of clutch plate 16.

Upon the raising of the brake plate 28, by translating rotational movement thereof to longitudinal movement, from its position shown in Figure 1 to its position shown in Figure 2, the friction elements 27 swing out under the urging of springs 26 to their positions shown in Figure 2 where the inclined clutching surfaces 27B of the friction elements 27 clutchingly engage the inclined surface 16A of clutch plate 16.

Thus, by this mechanism there is assurance that upon the de-clutching action, the braking action almost immediately occurs so that any rotation of the blade 20 thereupon and quickly ceases. This assures safety in the use of the lawn mower or other machine having a motor-driven rotatable working element. Also, upon the unbraking operation the clutching action almost immediately occurs and the mower or other machine may be operated. The "dead-man" control is particularly adapted for use in controlling the mechanism here disclosed and utilizing its advantages.

It may be noted that by the arrangement shown and described the braking action tends to be self-energizing. After the brake plate and braking surfaces of the friction elements initially engage, the frictional drag or pull tends to cause the frictional elements, mounted by the rivets 39 on carrier members 24, to shift outwardly to fuller and more complete braking engagement with the brake plate. The brake plate force directed toward the friction element also increases because of the reinforcement of the screw action of the brake plate. Similarly, there is a self-energizing action provided in the clutching action when the brake plate is raised out of braking position, in that initial clutching engagement of the frictional elements with clutching surface of the clutch plate tends to cause the frictional elements to shift to fuller and complete clutching engagement with the clutch plate. This self-energizing of the clutching action is introduced by centrifugal force imparted on the friction elements.

Although this invention has been described in its preferred form with a certain degree of particularity, it is understood that the present disclosure of the preferred form has been made only by way of example and that numerous changes in the details of construction and the combination and arrangements of parts may be resorted to without departing from the spirit and the scope of the invention as hereinafter claimed.

**Claims**

1. Clutch and brake mechanism for an apparatus having a clutch plate (16) non-rotatively connected to a rotary drive shaft (14), a non-rotating brake plate (28), a driven member (18) rotatably connected to the drive shaft, and a selectively operable friction member (27) movable so as to operate as a clutch between the driven member and the clutch plate or as a brake between the drive member and the brake plate, the mechanism being characterized in that the friction member (27) and brake plate (28) engage in an inclined surface, the brake plate (28) being movable upwards and downwards substantially in line with the axis of rotation of the drive shaft (14) between positions of engagement and disengagement with the friction member (27), and the selective engagement of the brake plate (28) with the friction member (27) moving the friction member (27) radially inward and outward of the axis rotation of the drive shaft.

2. The mechanism of claim 1 further characterized by the addition of spring means (26) biasing the friction member in contact with the clutch plate (16).

3. The mechanism of claim 2 characterized in that the spring means (26) biases the friction member (27) outward of the axis of rotation of the drive shaft (14).

4. The mechanism of claim 1 characterized in that the friction member (27) is movable inwards and outwards of the axis of rotation of the drive shaft (14) by the brake plate (28).

5. The mechanism of claim 4 characterized in that the clutch plate (16) radially surrounds the friction member (27).

6. The mechanism of claim 5 characterized by the addition of spring means (26) biasing the friction member (27) outward of the axis of rotation of the drive shaft (14), and in that the upwards position of the brake plate (28) allows movement of the friction member (27) in one direction of the axis of rotation of the drive shaft (14) into clutching engagement with the clutch plate (16) and the downwards position of the brake plate (28) brakingly engages the friction member (27) with the brake plate (28) and moves the friction member (27) in the other direction of the axis of rotation of the drive shaft (14).

7. The mechanism of claim 6 characterized in that the friction member (27) is in clutching engagement with the clutch plate (16) in its outward position and is in braking engagement with the brake plate (28) in its inward position.

8. The mechanism of claim 1 characterized in that the friction member (27) has a surface for contact with the brake plate (28) and further characterized in that the surface (27A) is at an angle in respect to the axis of rotation of the drive shaft (14).

9. The mechanism of claim 6 characterized in that the friction member (27) has a surface (27A) for contact with the brake plate (28) and further characterized in that the surface (27A) is at an angle in respect to the axis of rotation of the drive shaft (14).

10. The mechanism of any one of the preceding claims characterized in that the friction member (27) has a brake surface (27A) for contact with the brake plate (28) and further characterized by the addition of a spring means (26) biasing the friction member (27) in one direction perpendicular to the axis of rotation of the drive shaft (14) and in contact with the clutch plate (16), the brake surface (27A) being at an angle in respect to the axis of rotation of the drive shaft (14), and the brake plate (28) being movable upwards and downwards substantially in line with the axis of rotation of the drive shaft (14) with the brake plate (28) in its downward position being in contact with the brake surface (27A), such contact moving the friction member (27) opposite the direction perpendicular to the axis of rotation of the drive shaft (14) against the spring means (26) bias away from the clutch plate (16), with the brake (28) in its upward position being not in contact with the brake surface (27A) and allowing the spring means (26) to move the friction member (27) in the direction perpendicular to the axis of rotation of the drive shaft (14) and into contact with the clutch plate (16).

**Patentansprüche**

1. Kupplungs- und Bremseinrichtung für eine Vorrichtung mit einer Kupplungsplatte (16), die mit einer drehbaren Antriebswelle (14) ohne mögliche Drehbewegung gegenüber letzterer verbunden ist, einer nicht drehbaren Bremsplatte (28), einem Zwecks einer Drehbewegung mit der Antriebswelle verbundenen Abtriebsorgan (18) und einem Reibungsorgan (27), das wahlweise betätigbar ist und eine Bewegung ausführen kann, damit es die Funktion einer Kupplung zwischen dem Abtriebsorgan und der Kupplungsplatte bzw. einer Bremse zwischen dem Antriebsorgan und der Bremsplatte ausüben kann, dadurch gekennzeichnet, dass das Reibungsorgan (27) und die Bremsplatte (28) an einer schrägen Fläche zusammenwirken, wobei die Bremsplatte (28) nach oben und nach unten nahezu mit der Drehachse der Antriebswelle (14) Fluchtend zwischen einer Stellung, in der sie mit dem Reibungsorgan (27) zusammenwirkt und einer Stellung, in der sie von diesem Organ getrennt ist, beweglich ist, wobei ferner das wahlweise Zusammenwirken der Bremsplatte (28) mit dem Reibungsorgan (27) eine radiale Verlagerung des Reibungsorganes (27) nach innen und nach aussen gegenüber der Drehachse der Antriebswelle zur Folge hat.

2. Einrichtung nach Anspruch 1, im übrigen gekennzeichnet durch eine zusätzliche Federvorrichtung (26), die das Reibungsorgan in Kontakt mit der Kupplungsplatte (16) rückstellt.

3. Einrichtung nach Anspruch 2, dadurch gekennzeichnet, dass die Federvorrichtung (26) das Reibungsorgan (27) nach aussen gegenüber der Drehachse der Antriebswelle (14) rückstellt.

4. Einrichtung nach Anspruch 1, dadurch gekennzeichnet, dass das Reibungsorgan (27), unter der Wirkung der Bremsplatte (28), nach innen und nach aussen gegenüber der Drehachse der Antriebswelle (14) bewegbar ist.

5. Einrichtung nach Anspruch 4, dadurch gekennzeichnet, dass die Kupplungsplatte (16) das Reibungsorgan (27) radial umschliesst.

6. Einrichtung nach Anspruch 5, gekennzeichnet durch eine zusätzliche Federvorrichtung (26) die das Reibungsorgan (27) nach aussen gegenüber der Drehachse der Antriebswelle (14) rückstellt, wobei die obere Stellung der Bremsplatte (28) die Verlagerung des Reibungsorganes (27) in einem ersten Sinn in Richtung der Drehachse der Antriebswelle (14) durch Kupplung-Zusammenwirken mit der Kupplungsplatte (16) ermöglicht, und die untere Stellung der Bremsplatte (28) das bremsende Zusammenwirken des Reibungsorganes (27) mit der Bremsplatte (28) und die Verlagerung des Reibungsorganes (27) im anderen Sinne in Richtung der Drehachse der Antriebswelle (14) bewirkt.

7. Einrichtung nach Anspruch 6, dadurch gekennzeichnet, dass das Reibungsorgan (27) in seiner äusseren Stellung mit der Kupplungsplatte (16) kuppelnd und in seiner inneren Stellung mit der Bremsplatte (28) bremsend zusammenwirkt.

8. Einrichtung nach Anspruch 1, dadurch gekennzeichnet, dass das Reibungsorgan (27) eine Fläche besitzt, die dazu bestimmt ist, mit der Bremsplatte (28) in Berührung zu sein, und ferner dadurch, dass die Fläche (27A) mit der Drehachse der Antriebswelle (14) einen gewissen Winkel einschliesst.

9. Einrichtung nach Anspruch 6, dadurch gekennzeichnet, dass das Reibungsorgan (27) eine Fläche (27A) aufweist, die dazu bestimmt ist, mit der Bremsplatte (28) in Berührung zu sein, und ferner dadurch, dass die Fläche (27A) mit der Drehachse der Antriebswelle (14) einen gewissen Winkel einschliesst.

10. Einrichtung nach irgendeinem der vorhergehenden Ansprüche, dadurch gekennzeichnet, dass das Reibungsorgan (27) eine Bremsfläche (27A) aufweist, die dazu bestimmt ist, mit der Bremsplatte (28) in Berührung zu sein, und ferner gekennzeichnet durch eine zusätzliche Federvorrichtung (26), die das Reibungsorgan (27) senkrecht zur Drehachse der Antriebswelle (14) und in Kontakt mit der Kupplungsplatte (16) rückstellt, wobei die Bremsfläche (27A) mit der Drehachse der Antriebswelle (14) einen gewissen Winkel einschliesst, wobei die Bremsplatte (28) nach oben und nach unten nahezu mit der Drehachse der Antriebswelle (14) fluchtend beweglich ist, wobei die Bremsplatte (28) in ihrer unteren Stellung in Berührung ist mit der Bremsfläche (27A), welche Berührung die Verlagerung des Reibungsorganes (27) im entgegengesetzten Sinne senkrecht zur Drehachse der Antriebswelle (14) trotz der Rückstellkraft der Federvorrichtung (26), durch Entfernung der Kupplungsplatte (16), zur Folge hat, und wobei die Bremse (28) in ihrer oberen Stellung die Bremsfläche (27A) nicht berührt und es der Federvorrichtung (26) ermöglicht, das Reibungsorgan (27) im anderen Sinne senkrecht zur Drehachse der Antriebswelle (14) und in Kontakt mit der Kupplungsplatte (16) zu verlagern.

**Revendications**

1. Mécanisme d'embrayage et de freinage destiné à un appareil ayant une plaque (16) d'embrayage raccordée à un arbre rotatif (14) d'entraînement afin qu'elle ne puisse pas tourner par rapport à lui, une plaque non rotative (28) de freinage, un organe mené (18) raccordé à l'arbre d'entraînement afin qu'il puisse tourner, et un organe de friction (27) qui peut être manoeuvré sélectivement et qui est mobile afin qu'il joue le rôle d'un embrayage entre l'organe mené et la plaque d'embrayage ou d'un frein entre l'organe menant et la plaque de freinage, le mécanisme étant caractérisé en ce que l'organe (27) de friction et la plaque de freinage (28) coopèrent suivant une surface inclinée, la plaque de freinage (28) étant mobile vers le haut et vers le bas pratiquement dans l'alignement de l'axe de rotation de l'arbre d'entraînement (14) entre des positions de coopération avec l'organe de friction (27) et de séparation par rapport à cet organe, la coopération sélective de la plaque de freinage (28) avec l'organe de friction (27) provoquant le déplacement de l'organe de friction (27) radialement vers l'intérieur et vers l'extérieur de l'axe de rotation de l'arbre d'entraînement.

2. Mécanisme selon la revendication 1, caractérisé en outre par l'addition d'un dispositif à ressorts (26) rappelant l'organe de friction au contact de la plaque d'embrayage (16).

3. Mécanisme selon la revendication 2, caractérisé en ce que le dispositif à ressorts (26) rappelle l'organe de friction (27) vers l'extérieur de l'axe de rotation de l'arbre d'entraînement (14).

4. Mécanisme selon la revendication 1, caractérisé en ce que l'organe de friction (27) est mobile vers l'intérieur et vers l'extérieur par rapport à l'axe de rotation de l'arbre d'entraînement (14) sous l'action de la plaque de freinage (28).

5. Mécanisme selon la revendication 4, caractérisé en ce que la plaque d'embrayage (16) entoure radialement l'organe de friction (27).

6. Mécanisme selon la revendication 5, caractérisé par l'addition d'un dispositif à ressorts (26) rappelant l'organe de friction (27) vers l'extérieur de l'axe de rotation de l'arbre d'entraînement (14), et en ce que la position haute de la plaque de freinage (28) permet le déplacement de l'organe de friction (27) dans un premier sens dans la direction de l'axe de rotation de l'arbre d'entraînement (14) en coopération par embrayage avec la plaque d'embrayage (16) et la position basse de la plaque de freinage (28) assure la coopération par freinage de l'organe (27) de friction avec la plaque de freinage (28) et le déplacement de l'organe de friction (27) dans l'autre sens dans la direction de l'axe de rotation de l'arbre d'entraînement (14).

7. Mécanisme selon la revendication 6, caractérisé en ce que l'organe de friction (27) est en coopération par embrayage avec la plaque d'embrayage (16) dans sa position externe et est en coopération par freinage avec la plaque de freinage (28) dans sa position interne.

8. Mécanisme selon la revendication 1, caractérisé en ce que l'organe de friction (27) a une surface destinée à être au contact de la plaque de freinage (28) et caractérisé en outre en ce que la surface (27A) fait un certain angle avec l'axe de rotation de l'arbre d'entraînement (14).

9. Mécanisme selon la revendication 6, caractérisé en ce que l'organe de friction (27) a une surface (27A) destinée à être au contact de la plaque de freinage (28), et caractérisé en outre en ce que la surface (27A) fait un certain angle avec l'axe de rotation de l'arbre d'entraînement (14).

10. Mécanisme selon l'une quelconque des revendications précédentes, caractérisé en ce que l'organe de friction (27) a une surface de freinage (27A) destinée à être au contact de la plaque de freinage (28), et caractérisé en outre par l'addition d'un dispositif à ressorts (26) rappelant l'organe de friction (27) en direction perpendiculaire à l'axe de rotation de l'arbre d'entraînement (14) et au contact de la plaque d'embrayage (16), la surface de freinage (27A) faisant un certain angle avec l'axe de rotation de l'arbre d'entraînement (14), et la plaque de freinage (28) étant mobile vers le haut et vers le bas pratiquement dans l'alignement de l'axe de rotation de l'arbre d'entraînement (14), la plaque de freinage (28), dans sa position basse, étant au contact de la surface de freinage (27A), ce contact provoquant le déplacement de l'organe de friction (27) en sens opposé dans la direction perpendiculaire à l'axe de rotation de l'arbre d'entraînement (14) malgré la force de rappel du dispositif à ressorts (26), par éloignement de la plaque d'embrayage (16), le frein (28), dans sa position haute, n'étant pas au contact de la surface de freinage (27A) et permettant au dispositif à ressorts (26) de déplacer l'organe de friction (27) dans l'autre sens dans la direction perpendiculaire à l'axe de rotation de l'arbre d'entraînement (14) et au contact de la plaque d'embrayage (16).

Fig. 1

Fig. 2

**Fig. 3**

**Fig. 4**

2

*Fig. 5*

*Fig. 6*

*Fig. 7*

Fig. 8

Fig. 9

Fig. 10